# EUROPÄISCHE PATENTSCHRIFT

(11) **EP 2 239 161 B1**
(45) Veröffentlichungstag und Bekanntmachung des Hinweises auf die Patenterteilung: **26.09.2018**
(21) Anmeldenummer: 10003659.9
(22) Anmeldetag: 01.04.2010
(51) Int. Cl.: B60L 3/00, G01L 5/28, B60T 8/88, B60T 17/22

(54) **FLURFÖRDERZEUG MIT ELEKTRISCHER BREMSE**
INDUSTRIAL TRUCK WITH ELECTRIC BRAKE
ENGIN DE MANUTENTION DOTÉ D'UN FREIN ÉLECTRIQUE

(30) Priorität: 07.04.2009 DE 102009016780
(43) Veröffentlichungstag der Anmeldung: 13.10.2010
(73) Patentinhaber: Jungheinrich Aktiengesellschaft, 22047 Hamburg (DE)
(72) Erfinder: Glaeske, Jens, 22844 Norderstedt (DE)
(74) Vertreter: Hauck Patentanwaltspartnerschaft mbB

(56) Entgegenhaltungen:
- EP-A2- 1 464 532
- WO-A1-2010/123412
- DE-A1- 10 062 228
- DE-A1-102005 015 608

## Beschreibung

Die vorliegende Erfindung betrifft ein Flurförderzeug mit mindestens einem elektrischen Antrieb und mindestens einer elektrischen Bremse, die ein Bremsmoment erzeugen kann, das einem von dem Antrieb erzeugten Antriebsmoment auf einer Welle entgegenwirkt. Hierbei kann es sich beispielsweise um elektrisch gelüftete Einfallbremsen für den Fahrantrieb des Flurförderzeugs handeln.

Die elektrisch lüftbaren Einfallbremsen an einem Flurförderzeug sind elementare Bestandteile des Sicherheitskonzepts für das Flurförderzeug, deren Funktionsweise sicherzustellen ist.

Aus EP 1 464 532 A2 ist ein Bremssystem für batteriebetriebene Flurförderzeuge bekannt geworden, bei dem eine erste Umrechnungseinheit das Bremssignal in ein Solldrehmoment für den Antriebsmotor umrechnet und eine zweite Umrechnungseinheit das Istdrehmoment des Antriebsmotors in eine Istbremskaft umrechnet. Eine Vergleichseinrichtung vergleicht die Sollbremskraft mit der Istbremskraft und bildet einen zweiten Sollbremskraftwert, der an eine zweite Bremseinrichtung angelegt wird.

Aus DE 10 2005 015 608 A1 ist ein Verfahren zum Prüfen der Bremse eines Motors eines Roboters bekannt. Bei dem Verfahren wird der Motor bei eingefallener Bremse mit einem definierten Drehmoment angesteuert. Die Position des Motors wird mit dessen Anfangsposition verglichen.

Aus DE 100 62 228 A1 ist ein Verfahren zum Überprüfen einer Bremse eines Elektromotors bekannt, bei dem in einer Messsequenz im drehzahlgeregelten Betrieb die Bremse für kurze Zeit zum Einfallen gebracht wird, während dieser Zeit ein Motorstrom gemessen und aufgrund der so gewonnenen Messdaten das Bremsmoment der Bremse bestimmt wird.

Der Erfindung liegt die Aufgabe zugrunde, die Funktionstüchtigkeit der elektrischen Bremse zuverlässig zu testen.

Erfindungsgemäß wird die Aufgabe durch ein Flurförderzeug mit den Merkmalen aus Anspruch 1 gelöst. Vorteilhafte Ausgestaltungen bilden den Gegenstand der Unteransprüche.

Das erfindungsgemäße Flurförderzeug besitzt mindestens einen elektrischen Antrieb und mindestens eine elektrische Bremse, die ein Bremsmoment an einer angetriebenen Welle erzeugen kann. Der Antrieb erzeugt ebenfalls an der Welle ein Antriebsmoment. Zur Überwachung der Funktionstüchtigkeit der Bremse ist eine Bremsüberwachungseinrichtung vorgesehen, die Antrieb und Bremse ansteuern kann und an der eine von einem Drehzahlsensor erfasste Drehzahl der Welle anliegt. Zur Funktionsprüfung der Bremse steuert die Bremsüberwachungseinrichtung Bremse und Antrieb gleichzeitig an, wobei die Bremse zur Erzeugung ihres maximalen Bremsmoments angesteuert wird. Der Antrieb kann direkt von der Bremsüberwachungseinrichtung oder indirekt, beispielsweise über eine Fahrzeugsteuerung, von dieser angesteuert werden. Die erfasste Drehzahl der Welle wird mit einem vorbestimmten Maximalwert verglichen und bei Überschreiten des vorbestimmten Maximalwerts veranlasst die Bremsüberwachungseinheit eine Ansteuerung des Antriebs in entgegengesetzter Richtung, wobei das Warnsignal nur dann generiert wird, wenn die erfasste Drehzahl in beiden Richtungen den vorbestimmten Maximalwert überschreitet. Das Warnsignal zeigt an, dass trotz angesteuerter Bremse, d. h. die Bremse hat ihr maximales Bremsmoment entfaltet, eine Drehzahl an der Welle auftritt, die über einem vorbestimmten Maximalwert liegt. Durch das über den Antrieb auf die Welle gegebene Antriebsmoment kann durch das Betätigen der Bremse festgestellt werden, dass das erzeugte Bremsmoment nicht ausreicht, um einen Stillstand der Welle sicherzustellen. Auf diese Weise ergibt sich, dass die getestete Bremse nicht oder nur eingeschränkt funktionstüchtig ist. Indem bei Versagen der Bremse in einer Richtung auch die entgegengesetzte Richtung angesteuert wird, kann sichergestellt werden, dass die Funktionsprüfung auch ordnungsgemäß bei einem auf einer Rampe stehenden Flurförderzeug durchgeführt werden kann. Bei dem auf der Rampe stehenden Flurförderzeug wirkt bereits aufgrund der Schwerkraft ein Moment auf die Welle. Bei einem Funktionstest in einer Richtung wirken also motorisches Antriebsmoment und Hangabtriebskraft gemeinsam auf die Bremse, so dass die Welle trotz intakter Auslegung der Bremse bereits durchdrehen kann.

Bevorzugt ist als elektrische Bremse eine Einfallbremse vorgesehen, die im unbestromten Zustand ihr maximales Bremsmoment entfaltet.

In einer bevorzugten Ausgestaltung steuert die Bremsüberwachungseinrichtung den Antrieb über eine Drehmomentvorgabe an, wobei die Drehmomentvorgabe kleiner als das Nennmoment der Bremse ist. Alternativ ist es auch möglich, bei Antrieben, die über eine Drehzahlvorgabe angesteuert werden, mit Hilfe eines P-Drehzahlreglers ein entsprechendes Drehmoment an der Welle einzustellen.

Über die Vorgabe eines Drehmoments ist es möglich, für den Funktionstest ein Drehmoment auszuwählen, das kleiner als das Nennmoment der Bremse ist und das im Hinblick auf ein gerätespezifisches Bremsmoment der Bremse abgestimmt ist.

In einer weiteren bevorzugten Ausgestaltung wird die Funktionsprüfung abgebrochen, sobald die erfasste Drehzahl einen vorbestimmten zweiten Maximalwert überschritten hat. Der vorbestimmte zweite Maximalwert kann größer sein als der Maximalwert, der zur Funktionsprüfung der Bremse eingesetzt wird. So kann sichergestellt werden, dass das Flurförderzeug durch die Funktionsprüfung nicht verfahren wird.

Bevorzugt löst die Bremsüberwachungseinrichtung die Funktionsprüfung nach dem Start des Flurförderzeugs aus, insbesondere wenn das Flurförderzeug noch nicht bewegt wird.

Die Erfindung wird nachfolgend an einem Ausfiihrungsbeispiel näher erläutert. Die schematisch dargestellte Ansicht zeigt ein Rad 10 eines Flurförderzeugs, das über eine Welle 12 angetrieben wird. Diese Welle 12 wird über ein Getriebe 13 von einem Antrieb 14 angetrieben.

Die erfindungsgemäße Bremsüberwachungseinrichtung 22 besitzt Datenleitungen 24 und 26, über die die elektrisch betätigte Bremse 20 gelüftet und der Antrieb 14 angesteuert werden kann. Ein Drehzahlsensor 21 legt die erfasste Drehzahl an der Bremse über eine Datenleitung 26 an die Bremsüberwachungseinrichtung 22 an.

Bei der Prüfung der Bremse wird nach dem Start des Flurförderzeugs, solange dieses noch steht, der Antrieb 14 in einer ersten Drehrichtung mit einem vorbestimmten Drehmoment angesteuert. Gleichzeitig bleibt die Bremse 20 unbestromt, d. h. die Bremse 20 bremst maximal. Über die erfasste Drehzahl kann die Bremsüberwachungseinrichtung 22 feststellen, ob die aufgebrachte Bremskraft ausreichend ist, um dem Antriebsmoment des Antriebs 14 entgegenzuwirken.

Nachdem der Antrieb 14 in einer ersten Richtung angesteuert wurde, wird der Antrieb 14 in einer zweiten Phase der Bremsprüfung in entgegengesetzter Drehrichtung angesteuert. In der zweiten Phase wird erneut die Bremse 20 betätigt, wenn bei der Ansteuerung in der ersten Richtung die erfasste Drehzahl einen vorbestimmten Maximalwert für die Drehzahl überschritten hat. Die erfasste Drehzahl liegt auch in der zweiten Phase der Funktionsprüfung über die Datenleitung 26 an der Bremsüberwachungseinrichtung an. Die Bremsüberwachungseinrichtung vergleicht für die zweite Phase, ob an der Welle 12 oder einer B-Welle des Antriebs eine Drehzahl auftritt. Wenn eine Drehzahl auftritt, wird diese Drehzahl mit einem vorbestimmten Maximalwert für die Drehzahl verglichen. Da für die angreifenden Momente sich die Drehzahl mit der Zeit erhöht, wird dieser Vergleich zu einem definierten Zeitpunkt seit Ansteuerung des Antriebs 14 durchgeführt. Beispielsweise kann definiert sein, den Vergleich mit der vorbestimmten maximalen Drehzahl immer nach einer definierten Zeitdauer durchzuführen.

Die Bremsüberwachungseinrichtung 22 generiert ein Warnsignal, wenn die erfasste Drehzahl in beiden Richtungen der Ansteuerung eine vorbestimmte maximale Drehzahl überschreitet. Das Warnsignal der Bremsüberwachungseinrichtung liegt über einer Datenleitung 28 an einer übergeordneten Steuerung 30 an. Hierbei kann es sich beispielsweise um eine Fahrzeugsteuerung des Flurförderzeugs handeln.

Stellt die Fahrzeugsteuerung fest, dass ein Warnsignal von der Bremsüberwachungseinrichtung generiert wurde, so kann diese einen optischen Warnhinweis für den Fahrer geben. Alternativ ist es auch möglich, direkt vorzusehen, das Warnsignal an einer übergeordneten Steuerung weiterzuleiten oder dass die Fahrzeugsteuerung einen Betrieb des Flurförderzeugs verhindert, bis die Bremsen wieder in Stand gesetzt sind.

In einer alternativen Ausgestaltung ist es auch möglich, dass der Antrieb 14 nicht von der Bremsüberwachungseinrichtung 22 sondern von der Fahrzeugsteuerung angesteuert wird, wobei in diesem Fall Signale zur Ansteuerung des Antriebs von der Bremsüberwachungseinrichtung an die Fahrzeugsteuerung weitergeleitet werden.

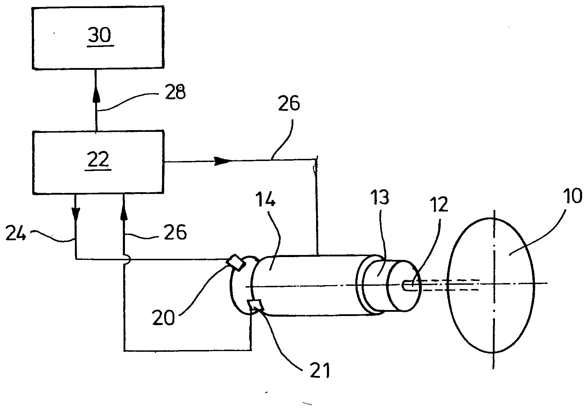

## Patentansprüche

1. Flurförderzeug mit mindestens einem elektrischen Antrieb (14) und einer elektrischen Bremse (20), die ein Bremsmoment erzeugen kann, das einem von dem Antrieb (14) erzeugten Antriebsmoment einer Welle (12) entgegenwirkt, **gekennzeichnet durch** eine Bremsüberwachungseinrichtung (22), die Antrieb (14) und Bremse (20) steuern kann und an der eine von einem Drehzahlsensor (21) erfasste Drehzahl der Welle anliegt, wobei die Bremsüberwachungseinrichtung (22) zur Funktionsprüfung bei stehendem Fahrzeug den Antrieb (14) in eine erste Richtung und die Bremse (20) gleichzeitig zur Erzeugung ihres maximalen Bremsmoments ansteuert, die erfasste Drehzahl mit einem vorbestimmten Maximalwert vergleicht und bei Überschreiten des vorbestimmten Maximalwerts den Antrieb (16) in eine zweite Richtung ansteuert, wobei ein Warnsignal generiert wird, wenn die erfasste Drehzahl in beiden Richtungen den vorbestimmten Maximalwert überschreitet.

2. Flurförderzeug nach Anspruch 1, **dadurch gekennzeichnet, dass** als elektrische Bremse eine Einfallbremse vorgesehen ist, die ihr maximales Bremsmoment im unbestromten Zustand erzeugt.

3. Flurförderzeug nach Anspruch 1 oder 2, **dadurch gekennzeichnet, dass** die Bremsüberwachungseinrichtung (22) den Antrieb (14) über eine Drehmomentvorgabe ansteuert, die kleiner als das Nennmoment der Bremse ist.

4. Flurförderzeug nach Anspruch 1 oder 2, **dadurch gekennzeichnet, dass** die Bremsüberwachungseinrichtung (22) den Antrieb (14) über eine Drehzahlvorgabe ansteuert, wobei ein Drehzahlregler ein entsprechendes Drehmoment an dem Antrieb (14) einstellt.

5. Flurförderzeug nach einem der Ansprüche 1 bis 4, **dadurch gekennzeichnet, dass** die Bremsüberwachungseinrichtung den Antrieb nicht länger ansteuert, wenn die erfasste Drehzahl einem vorbestimmten zweiten Maximalwert überschreitet.

6. Flurförderzeug nach einem der Ansprüche 1 bis 5, **dadurch gekennzeichnet, dass** die Bremsüberwachungseinrichtung eine Funktionsprüfung nach einem Start des Flurförderzeugs auslöst.

## Claims

1. An industrial truck with at least one electric drive (14) and an electric brake (20), which can generate a braking torque which counter-acts a driving torque of a shaft (12) generated by the drive (14), **characterised by** a brake monitoring device (22), which can command the drive (14) and the brake (20) and to which a rotational speed of the shaft, captured by a speed sensor (21) is applied, wherein
for function testing at standing vehicle, the brake monitoring device (22) commands the drive (16) into a first direction and at the same time the brake (20) to generate its maximum torque, compares the captured rotational speed with a predetermined maximum value and commands the drive (16) into a second direction when the predetermined maximum value is exceeded, an alarm signal being generated if the captured rotational speed exceeds the predetermined maximum value in both directions.

2. The industrial truck according to claim 1, **characterised in that** an incursion brake is provided as electric brake, which generates its maximum braking torque in the voltage removed condition.

3. An industrial truck according to claim 1 or 2, **characterised in that** the brake monitoring device (22) commands the drive (14) via a defined torque which is smaller than the rated torque of the brake.

4. An industrial truck according to claim 1 or 2, **characterised in that** the brake monitoring device (22) commands the drive (14) via a defined rotational speed, wherein a speed governor adjusts a corresponding torque on the drive (14).

5. An industrial truck according to any one of the claims 1 to 4, **characterised in that** the brake monitoring device no more commands the drive when the captured rotational speed has exceeded a predefined second maximum value.

6. An industrial truck according to any one of the claims 1 to 5, **characterised in that** the brake monitoring device triggers a function test after a start of the industrial truck.

## Revendications

1. Chariot de manutention avec au moins un entraînement électrique (14) et un frein électrique (20), qui peut générer un couple de freinage qui agit contre un couple d'entraînement d'un arbre (12) généré par l'entraînement (14), **caractérisé par** un dispositif de surveillance du freinage (22), qui peut commander l'entraînement (14) et le frein (20) et auquel est appliquée une vitesse de rotation de l'arbre, détectée par un capteur de vitesse de rotation (21), et dans lequel,
pour le test de fonctionnement chez véhicule débout, le dispositif de surveillance du freinage (22) commande l'entraînement (14) vers une première direction et au même temps le frein (20) à générer son couple maximal, compare la vitesse de rotation saisie avec une valeur maximale prédéterminée et commande l'entraînement (16) vers une deuxième direction quand la valeur maximale prédéterminée est dépassée, un signal d'alarme étant généré quand la vitesse de rotation saisie dépasse la valeur maximale prédéterminée dans toutes les deux directions.

2. Chariot de manutention selon la revendication 1, **caractérisé en ce que** un frein à incursion est prévu comme frein électrique, qui génère son couple de freinage maximal dans la condition non alimentée de courant.

3. Chariot de manutention selon la revendication 1 ou 2, **caractérisé en ce que** le dispositif de surveillance du freinage (22) commande l'entraînement (14) via un couple prédéfini qui est plus petit que le couple nominal du frein.

4. Chariot de manutention selon la revendication 1 ou 2, **caractérisé en ce que** le dispositif de surveillance du freinage (22) commande l'entraînement (14) via une vitesse de rotation prédéfinie, un régulateur de la vitesse de rotation réglant un couple correspondant sur l'entraînement (14).

5. Chariot de manutention selon l'une quelconque des revendications 1 à 4, **caractérisé en ce que** le dispositif de surveillance du freinage ne commande plus l'entraînement quand la vitesse de rotation saisie a dépassé une deuxième valeur maximale prédéfinie.

6. Chariot de manutention selon l'une quelconque des revendications 1 à 5, **caractérisé en ce que** le dispositif de surveillance du freinage enclenche un test de fonctionnement après un démarrage du chariot de manutention.
